# EUROPÄISCHE PATENTSCHRIFT

(11) **EP 2 720 785 B1**
(45) Veröffentlichungstag und Bekanntmachung des Hinweises auf die Patenterteilung: **23.03.2016**
(21) Anmeldenummer: 11727150.2
(22) Anmeldetag: 16.06.2011
(51) Int. Cl.: B01J 2/16

(54) **VORRICHTUNG ZUM BEHANDELN VON PARTIKELFÖRMIGEM GUT**
DEVICE FOR TREATING PARTICULATE MATERIAL
DISPOSITIF DESTINÉ AU TRAITEMENT DE MATIÈRES PARTICULAIRES

(43) Veröffentlichungstag der Anmeldung: 23.04.2014
(73) Patentinhaber: Romaco Innojet GmbH, 79585 Steinen (DE)
(72) Erfinder: HUETTLIN, Herbert, 79585 Steinen (DE)
(74) Vertreter: Witte, Weller & Partner Patentanwälte mbB
(86) Internationale Anmeldenummer: PCT/EP2011/060040
(87) Internationale Veröffentlichungsnummer: WO 2012/171567

(56) Entgegenhaltungen:
- WO-A1-02/100527
- WO-A1-2007/124745
- WO-A1-2011/048085

## Beschreibung

Die Erfindung betrifft eine Vorrichtung zum Behandeln von partikelförmigem Gut, mit einer Prozesskammer zum Aufnehmen und Behandeln des Gutes, mit einem Boden mit zahlreichen Durchtrittsöffnungen, durch die Prozessluft in die Prozesskammer einführbar ist, wobei die Durchtrittsöffnungen derart ausgebildet sind, dass zwei radial entgegengesetzt ausgerichtete Strömungen entstehen, die längs einer kreisförmigen Aufbruchzone aufeinandertreffen und nach oben abgelenkt werden, wobei in der Aufbruchzone dem Gut ein Behandlungsmedium auferlegbar ist.

Eine derartige Vorrichtung ist beispielsweise aus der WO 02/100527 A1 bekannt.

Bei dieser Technologie wird ein partikelförmiges Gut durch so genannte Prozessluft in einer Prozesskammer bewegt. Im einfachsten Fall wird das bewegte Gut durch erwärmte Prozessluft getrocknet.

Eine weitere Behandlung ist das Granulieren oder Überziehen (so genanntes Coaten) des partikelförmigen Gutes.

Beim Granulieren werden meist feinstäubige Pulver, insbesondere wertvolle Wirkstoffe in der pharmazeutischen Industrie, mittels eines klebrigen Mediums zu größeren Körpern agglomeriert. Dazu werden die feinstäubigen Pulver durch die Prozessluft umgewälzt, und den umgewälzten Gutteilchen wird das Behandlungsmedium in Form eines fein versprühten Flüssigkeitsnebels auferlegt.

Beim Coaten wird auf bereits vorhandene Körper, beispielsweise Pellets oder Tabletten, eine Überzugsschicht nach und nach aufgebracht. Diese Überzugsschicht soll beispielsweise dafür sorgen, dass eine solche überzogene, oral verabreichte Tablette sich erst in einem bestimmten Abschnitt des Magen-Darm-Traktes auflöst.

Ein grundsätzliches Bestreben in dieser Technologie ist, ein möglichst gleichmäßiges Behandlungsergebnis zu erzielen.

Beim Granulieren bedeutet dies, dass eine möglichst enge Korngrößenverteilung der Agglomerate erzielt werden soll. Beim Granulieren kann ein relativ inhomogenes Ergebnis durch nachgeschaltete Siebvorgänge wieder etwas verbessert werden.

Beim Coaten ist dies jedoch nicht möglich, denn es stehen keine wirtschaftlich sinnvollen Prozesse zur Verfügung, die ein Aussortieren von Körpern mit entweder zu dünnen oder zu dicken Beschichtungen erlauben. Beim Coaten besteht ferner das Problem, dass die ausgangs schon relativ großen Körper, beispielsweise frisch verpresste Tablettenrohlinge, relativ empfindlich gegen mechanische Stöße sind, so dass beim Umwälzen, insbesondere in der Anfangsphase, eine erhebliche Gefahr besteht, dass Ausbrüche entstehen, die zu unansehnlichen und letztlich auch unvollständigen Körpern führen.

In dem "Lehrbuch der Pharmazeutischen Technologie", Bauer/ Frömming/Führer, 8. Auflage 2006, Kapitel 14, Feste Arzneiformen, Seite 344 sind Flugschicht- oder Luftgleitschichtüberzugsgeräte nach dem so genannten "WURSTER-Verfahren" beschrieben. Der Boden besteht aus einer perforierten Platte. Im Inneren der Prozesskammer und im Abstand über der perforierten Platte ist mittig ein sowohl oben als auch unten offener Führungszylinder angeordnet. Eine Sprühdüse steht am unteren Ende des offenen Zylinders und sprüht vertikal nach oben in diesen gerichtet das Sprühmedium hinein. Die Perforationen im Boden sind nunmehr so ausgerichtet, dass ein großer Anteil der durch den Boden eingeführten Prozessluft von unten in den Führungszylinder einströmt, dabei einen Teil des Gutes mitreißt und vertikal nach oben bewegt. Im Inneren des Zylinders wird dann das nach oben bewegte Gut mit dem Behandlungsmedium besprüht. Nachdem das Gut das obere Ende des Führungszylinders verlassen hat, fällt es seitlich nach außen und aufgrund der Schwerkraft wieder ab in Richtung Boden. Im Bereich des Bodens wird es dann erneut nach innen in Richtung der unteren Ansaugöffnung am unteren Ende des offenen Zylinders angesaugt.

Beim Scaling-up wird der Durchmesser des Zylinders einfach vergrößert, und je nach Bedarf werden statt einer nun mehrere vertikal nach oben sprühende Düsen eingesetzt. Bei sehr großen Anlagen werden mehrere solche Zylinder gleichmäßig auf dem kreisförmigen Boden verteilt aufgestellt und, je nach Größe, eine entsprechende Anzahl an Düsen jeweils im unteren Bereich des offenen Zylinders eingesetzt.

Im praktischen Einsatz wurde festgestellt, dass in einem solchen Prozessraum starke Verwirbelungen auftreten und, insbesondere bei großen Anlagen, Überschneidungen der Saugbereiche der einzelnen Führungszylinder vorhanden sind. Zugleich existieren abseits der Überschneidungsbereiche gewisse Totzonen, die ungünstig und so weit abseits der Ansaugöffnungen liegen, dass ein ungleichmäßiges Behandlungsergebnis erzielt wird. Die erheblichen Verwirbelungen können auch, insbesondere beim Coaten, zu Beschädigungen der Körper führen.

Bei einem weiteren in diesem Lehrbuch beschriebenen System, dem so genannten "HÜTTLIN-System", wird die Prozessluft mit einer im Wesentlichen horizontal und umfänglich gerichteten Komponente durch den Boden in die Prozesskammer eingeführt. Dadurch entsteht im Bereich des Bodens eine Art Luftpolster, in das die von oben herabfallenden Gutteilchen beschädigungsarm einfallen und wieder in die nach oben gerichtete Bewegung umgelenkt und beschleunigt werden können. Durch die zusätzlich umfänglich gerichtete Bewegungskomponente bildet sich ein auf dem Boden schwebendes, sich toroidal umwälzendes, meist ringförmiges Gutbett aus, in dem die einzelnen Gutteilchen sehr homogen bewegt werden.

Die eingangs erwähnte Vorrichtung arbeitet nach diesem HÜTTLIN-System. Dabei werden, im Bereich des Bodens gesehen, zwei entgegengesetzt gerichtete, radial sich aufeinander zu bewegende Strömungen erzeugt, die im Bereich einer kreisförmigen Aufbruchzone aufeinandertreffen und nach oben abgelenkt werden. Man kann sich das so vorstellen, dass beidseits der kreisförmigen Aufbruchzone jeweils ein sich drehendes, toroidal gleichförmig umwälzendes Gutbett existiert, das im Bereich des Bodens die beiden radial entgegengesetzt gerichteten Strömungen aufweist, die in der Aufbruchzone um 90° nach oben umgelenkt werden. In der Aufbruchzone sind entweder mehrere punktförmige oder längs der kreisförmigen Aufbruchzone verlaufende Schlitzdüsen angeordnet, die das Behandlungsmedium vertikal nach oben in der Aufbruchzone sprühen. Die beidseits herangeführten Strömungen führen das Gut in den Sprühstrahl. Dort wird das Gut mit dem Sprühmedium beaufschlagt, während es vertikal nach oben bewegt wird.

Danach teilen sich die Produktströme wieder in einen radial nach außen und einen radial nach innen aufgrund der Schwerkraft abfallenden Gutstrom, wobei die Prozessluft vertikal nach oben zu einem Auslass strömt. Während dieser Bewegungsphase, also dem radialen Umlenken und Nachuntenfallen, trocknet das Behandlungsmedium, so dass dann ein erneuter Behandlungsvorgang mit dem flüssigen Behandlungsmedium, beispielsweise einer zunächst flüssigen Überzugsschicht, durchgeführt werden kann.

Bei der eingangs genannten WO 02/100527 A1 werden die beiden oppositären Strömungen im Boden durch übereinander gelegte, sich teilweise überlappende, ebene Ringbleche realisiert, wobei zwischen den ebenen Ringblechen entsprechende Ringspaltdüsen entstehen, die der durchtretenden Prozessluft die horizontale Bewegungskomponente auferlegen. Diese horizontal bewegten Prozessluftmengen wirken als ein Luftkissen oder Luftpolster für das zu behandelnde Produkt. Durch entsprechende Leitschaufeln oder Umlenkelemente zwischen den einzelnen sich überlappenden Ringblechen kann der durchströmenden Prozessluft zugleich auch eine umfänglich gerichtete Bewegungskomponente auferlegt werden, die dafür sorgt, dass sich dann das Gutbett dreht. In Überlagerung mit dem Auf- und Absteigen der Gutteilchen entsteht dann der toroidal umlaufende Bewegungspfad innerhalb eines solchen ringförmigen Umwälzbettes.

Aus der DE 10 2009 051 584 A1 ist es bekannt geworden, die beiden oppositären Strömungen dadurch zu erzeugen, dass der Boden aus einer gelaserten Platte besteht, in der entsprechend ausgerichtete und geneigte Schlitze ausgelasert sind.

Mit beiden Vorrichtungen können schon sehr gute Behandlungsergebnisse erzielt werden, insbesondere beim Coaten können sehr maßhaltige Überzugsschichten erzielt werden. Dennoch ist eine gewisse Bandbreite der erzielten Überzugsschicht festzustellen.

Es ist daher Aufgabe der vorliegenden Erfindung, eine Vorrichtung der eingangs genannten Art mit solchen oppositären Strömungen dahingehend weiterzuentwickeln, dass ein noch weiter verbessertes, gleichmäßiges Behandlungsergebnis zu erzielen ist.

Erfindungsgemäß wird die Aufgabe dadurch gelöst, dass die Aufbruchzone sowohl radial innen als auch radial außen von einer umfänglich hochstehenden Wand umgrenzt ist, die jeweils im Abstand über dem Boden stehen.

Diese Maßnahme hat den Vorteil, dass im Bereich der Aufbruchzone über eine gewisse Höhe durch die Wände eine radial innere als auch eine radial äußere Begrenzung vorhanden ist.

Dadurch entsteht für die vertikal nach oben bewegten Medien, also die Prozessluft und das Sprühmedium sowie die darin umgewälzten Produktteilchen, über eine gewisse vertikale Wegstrecke, nämlich über die Höhe der beiden Wände, eine Zwangsführung in dem Sinne, dass keines der Medien sich in diesem Bereich radial weiter nach außen oder nach innen bewegen kann, als das diese Wände zulassen.

Genau in dem Bereich, in dem das Sprühmedium möglichst gleichmäßig auf die nach oben beschleunigten Produktteilchen aufgebracht werden soll, findet nun eine streckenweise Verstetigung des vertikalen Bewegungspfades dahingehend statt, dass kein Ausweichen oder Entweichen außer in vertikaler Richtung möglich ist. Dadurch ist es möglich, in diesem Bereich relativ hohe Mengen an Behandlungsmedium pro Zeiteinheit aufzuerlegen. Die in dem Ringraum vorhandene Prozessluft hält eine gleichmäßige und richtungsgerichtete Umwälzbewegung in dem Ringraum aufrecht. Das heißt, die Bewegungskomponente in vertikaler Richtung und die gleichzeitig umfänglich gerichtete Bewegungskomponente sorgen für eine homogene Umwälzbewegung in dem Bereich zwischen den Wänden und dein mitgeführten Gut. Es wurde festgestellt, dass in dieser Beschleunigungszone zwischen den beiden hochstehenden Wänden das aufzusprühende Medium nicht nur in einer relativ großen Menge, sondern auch in einer sehr gleichmäßigen Verteilung auf die Gutkörper aufgebracht werden kann.

Nach dem Verlassen des oberen Endes des Ringraumes können sich die Gasmengen entspannen, sprich radial aufweiten, und die Gutteilchen können sich in dem radial nach außen oder radial nach innen gerichteten abfallenden Bewegungspfad bewegen. Dabei bewegen sich die Gutteilchen relativ gesehen voneinander weg, so dass nicht die Gefahr besteht, dass sich die in diesem Bereich noch mit dem feuchten, klebrigen Medium oberflächlich versehenen Gutteilchen treffen und zu größeren Agglomeraten verbacken. Während der Zeitdauer des Herabfallens und dem erneuten Inkontaktkommen mit der durch den Boden zugeführten frischen Prozessluft kann das aufgesprühte Medium weitgehend abtrocknen. Danach werden die Teilchen wieder in Richtung Aufbruchzone transportiert und dort erneut vertikal nach oben beschleunigt und besprüht.

Insgesamt gesehen kann ein weiter verbessertes Ergebnis, insbesondere beim Coaten, erzielt werden, das heißt, es können homogenere Überzugsschichtdicken erzielt werden. Dies ist insbesondere im pharmazeutischen Bereich von großer Bedeutung. Die Überzugsschicht soll sich nach oraler Verabreichung erst nach einer ganz bestimmten Zeitdauer auflösen, so dass sich in einem ganz bestimmten vorhersehbaren Abschnitt im Magen-Darm-Trakt dann der im Inneren der Tablette vorhandene Wirkstoff freisetzen kann. Bei Wirkstoffen, die beim Freisetzen an anderen Stellen erhebliche Nebenwirkungen zeigen oder womöglich gar keine Wirkung mehr zeigen, weil beispielsweise der Wirkstoff bereits im Magen von der dort vorhandenen Magensäure völlig abgebaut wurde, ist einleuchtend, dass ein Coaten mit einer hohen Maßhaltigkeit ein entscheidender Faktor ist. Mit der nunmehr weiter durchgeführten Verbesserung kann dies durch Vorsehen der beiden Wände, die die Aufbruchzone in radialer Richtung umgrenzen, erzielt werden.

Ein Scaling-up kann einfach dadurch erzielt werden, dass bei größeren Vorrichtungen das Umfangsmaß der ringförmigen Aufbruchzone größer ist und dadurch der Raum innerhalb der Wände entsprechend vergrößert wird. Dabei bleibt die Umwälz- und Umschichtcharakteristik in der Prozesskammer unverändert, und es entstehen keine Totzonen oder dergleichen.

In einer Ausgestaltung der Erfindung werden die Wände durch koaxial ineinander gesetzte Rohrabschnitte gebildet.

Diese Maßnahme hat den Vorteil, dass durch konstruktiv besonders einfache Bauelemente die die Aufbruchzone umgrenzenden Wände realisiert werden können. Solche Bauelemente sind einfach zu reinigen, so dass auch den diesbezüglich hohen Anforderungen in der pharmazeutischen Industrie Genüge getan werden kann.

In einer weiteren Ausgestaltung der Erfindung sind die beiden Wände in einem unteren Abschnitt zylindrisch ausgebildet und in einem oberen Abschnitt radial geneigt und verlaufen, umfänglich gesehen, längs einer Wellenlinie.

Dadurch entstehen innerhalb der vertikalen Produktbeschleunigungszone umfängliche Abschnitte, bei denen das Produkt nach innen oder nach außen bewegt werden und auch teilweise zurückfallen kann.

Hier kann von einem gewissen Kreuz-Mischungs-Effekt gesprochen werden. Dadurch kann eine noch intensivere Vermischung in der vertikalen Beschleunigungszone erzielt werden, wobei die mäander- bzw. wellenförmige Linienführung die umfängliche Kreisbewegung des Produktes wenig stört.

In einer weiteren Ausgestaltung der Erfindung ist der radiale Abstand der Wände untereinander derart ausgebildet, dass diese eine Querschnittsfläche umgrenzen, die 10 % bis 40 % der freien Querschnittsfläche des Bodens beträgt. Die freie Querschnittsfläche ist der Bereich des Bodens, auf dem das Gut aufliegen kann.

In weiteren vorteilhaften Ausgestaltungen ist der radiale Abstand der Wände so gewählt, dass dieser eine Querschnittsfläche umgrenzt, die 15 % bis 35 % bzw. 10 % bis 30 % der freien Querschnittsfläche des Bodens belegen.

Es wurde festgestellt, dass im Bereich dieser Querschnittsflächen hervorragende Behandlungsergebnisse mit einem hohen Durchsatz an Produktteilchen durch die vertikale Aufbruch- bzw. Beschleunigungszone erzielt werden können.

In einer weiteren Ausgestaltung der Erfindung ist der Höhenabstand des jeweils unteren Endes der Wände zum Boden derart ausgebildet, dass ein überwiegender Anteil der in der Aufbruchzone nach oben umgelenkten Prozessluftmengen in den Ringraum zwischen den beiden Wänden einströmbar ist.

Damit wird sichergestellt, dass der überwiegende Anteil der Prozessluftmengen für die Behandlung in dem Ringraum in diesen eingebracht werden kann und in dem Bereich der eigentlichen Behandlung zur Verfügung steht. Dies trägt auch zu einer weiteren Homogenisierung der gesamten Umschichtbewegung innerhalb der Vorrichtung bei, das heißt in der vertikalen Aufbruchzone eine nach vertikal gerichteten Beschleunigungsbewegung und außerhalb dieser Zone eine sich radial entspannende Bewegung, die dann ein Trennen von Prozessluft und Gutteilchen erlaubt, so dass die Prozessluft an das obere Ende abströmen kann und die Gutteilchen sich gleichmäßig umgewälzt in Richtung Boden zurückbewegen.

In einer weiteren Ausgestaltung der Erfindung beträgt der Höhenabstand 30 % bis 70 % des radialen Abstandes der Wände untereinander. Dabei wurde festgestellt, dass ebenfalls hervorragende Ergebnisse im Bereich eines Höhenabstandes erzielt werden können, der 40 % bis 60 % des radialen Abstandes der beiden Wände untereinander entspricht, insbesondere wenn dieser Höhenabstand 50 % beträgt.

Diese Werte erlauben ein strömungsgünstiges Eintreten der Prozessluftmengen in den Ringraum, ohne dass Strömungsabrisse oder Verwirbelungen entstehen, die das Behandlungsergebnis ungünstig beeinflussen könnten. Im Rahmen dieser Verhältnisse zwischen Höhenabstand und radialem Abstand der Wände untereinander kann für einen harmonischen Übergang von der horizontalen in die vertikale zwangsgeführte Strömung in der Aufbruchzone gesorgt werden.

In einer weiteren Ausgestaltung der Erfindung steht das Verhältnis zwischen dem Höhenabschnitt der inneren Wand und dem Höhenabstand der äußeren Wand in Relation zum Verhältnis des bezüglich der Aufbruchzone innen liegenden freien Querschnitts des Bodens zum bezüglich der Aufbruchzone außen liegenden freien Querschnitt des Bodens.

Die Fläche des freien Querschnittes des Bodens, die radial innerhalb der Aufbruchzone liegt, ist meist unterschiedlich zu der Fläche des freien Bodenquerschnitts, die radial außerhalb der Aufbruchzone liegt.

Ist die freie Querschnittsfläche des inneren Abschnitts des Bodens kleiner als die radial äußere, kann durch den inneren Abschnitt dementsprechend weniger Prozessluft strömen und sich in Richtung auf die Aufbruchzone bewegen. In der entgegengesetzten Richtung bewegen sich entsprechend größere Prozessluftmengen von außen nach innen gerichtet auf die Aufbruchzone zu. Der Höhenabstand der unteren Kante der jeweiligen Wand zum darunterliegenden Boden wird entsprechend diesem Verhältnis ausgewählt. Ist also beispielweise die durchtretende Prozessluftmenge im inneren Abschnitt des Bodens geringer, ist der Höhenabstand der inneren Wand zum Boden geringer als der Höhenabstand der äußeren Wand. Das Verhältnis der Höhenabstände untereinander entspricht dann dem Verhältnis der freien Querschnitte von innerem und äußerem Bodenabschnitt.

Tritt beispielsweise 40 % der Prozessluftmenge durch den radial innen zur Aufbruchzone liegenden Bodenabschnitt durch und dementsprechend 60 % aus dem radial äußeren Abschnitt des Bodens, wird der Höhenabstand der inneren Wand zu der äußeren Wand in ein Verhältnis von 40:60 gesetzt.

Dadurch kann den anströmenden unterschiedlichen Prozessluftmengen genüge getan werden, wobei aber sichergestellt bleibt, dass von den anströmenden Prozessluftmengen ein hoher prozentualer Anteil in den inneren Ringraum eingelenkt wird. Auch diese Maßnahme trägt zu einem homogenen Behandlungsergebnis bei.

In einer weiteren Ausgestaltung der Erfindung ist die Höhe der Wände derart bemessen, dass in dem durch diesen umgrenzten Ringraum ein erwünschter Kontakt zwischen den durch den Ringraum vertikal bewegten Gutteilchen und einem der Aufbruchzone zugeführten Behandlungsmedium erzielbar ist.

Jede Düse, die ein Behandlungsmedium aussprüht, hat eine bestimmte Sprühstrahlcharakteristik. Nachvollziehbare, kontrollierbare und gleichbleibende Ergebnisse können dann erzielt werden, wenn die gesamte Sprühgutmenge, die von der Düse ausgesprüht wird, im Bereich der Aufbruchzone auf Gutteilchen gleichmäßig auferlegt wird. Dadurch wird verhindert, dass sich beispielsweise Sprühmedium nach und nach an den Wänden absetzt oder dass Sprühmedium sich in der Prozesskammer bewegt und befindet, in der eigentlich schon der Trocknungsvorgang ablaufen soll. Es soll auch verhindert werden, dass einem bereits mit Sprühmedium beaufschlagten Gutteilchen nochmals an einer anderen Stelle unerwünscht Sprühmedium auferlegt wird. Die Wahl der Höhe erlaubt es nun, die Zwangsführungsstrecke auf ein solches Maß einzustellen, dass der erwünschte intensive Austausch zwischen den vertikal nach oben beschleunigten Gutteilchen und dem ausgesprühten Behandlungsmedium in Form von Flüssigkeitströpfchen erzielt wird, danach aber die Entspannung und das radial seitliche Auseinanderbewegen der besprühten Gutteilchen ermöglicht wird. Dadurch kann der intensive Trocknungsvorgang alsbald nach Verlassen der vertikalen Beschleunigungszone eintreten, so dass die Teilchen, bis sie dann wieder den Bodenbereich erreichen, schon möglichst weit abgetrocknet sind.

In einer weiteren Ausgestaltung der Erfindung ist die radial innere Wand am oberen Ende nach innen gebogen, und die radial äußere Wand ist nach außen gebogen.

Diese Maßnahme hat den Vorteil, dass das obere Ende des Ringraumes trompetenartig aufgeweitet ist und die ab dieser Stelle einsetzende und mögliche Entspannung mit einsetzender radialer Bewegung der Gutteilchen fördert.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nachfolgend anhand einiger ausgewählter Ausführungsbeispiele im Zusammenhang mit den beiliegenden Zeichnungen näher beschrieben und erläutert. Es zeigen:
- Fig. 1: einen Vertikalschnitt eines ersten Ausführungsbeispiels einer erfindungsgemäßen Vorrichtung,
- Fig. 2: eine vergrößerte Darstellung der rechten Hälfte des Schnittes von Fig. 1, zur Erläuterung der Strömungsverhältnisse,
- Fig. 3: einen der Darstellung von Fig. 1 vergleichbaren Schnitt eines zweiten Ausführungsbeispiels einer erfindungsgemäßen Vorrichtung mit gewellten Wänden,
- Fig. 4: eine Draufsicht auf den Boden der Vorrichtung von Fig. 3,
- Fig. 5: einen Längsschnitt eines dritten Ausführungsbeispiels einer erfindungsgemäßen Vorrichtung mit gelasertem Boden und einer Entstaubungsvorrichtung mit Gutrückführung, und
- Fig. 6: eine Draufsicht auf den Boden der Vorrichtung von Fig. 5.

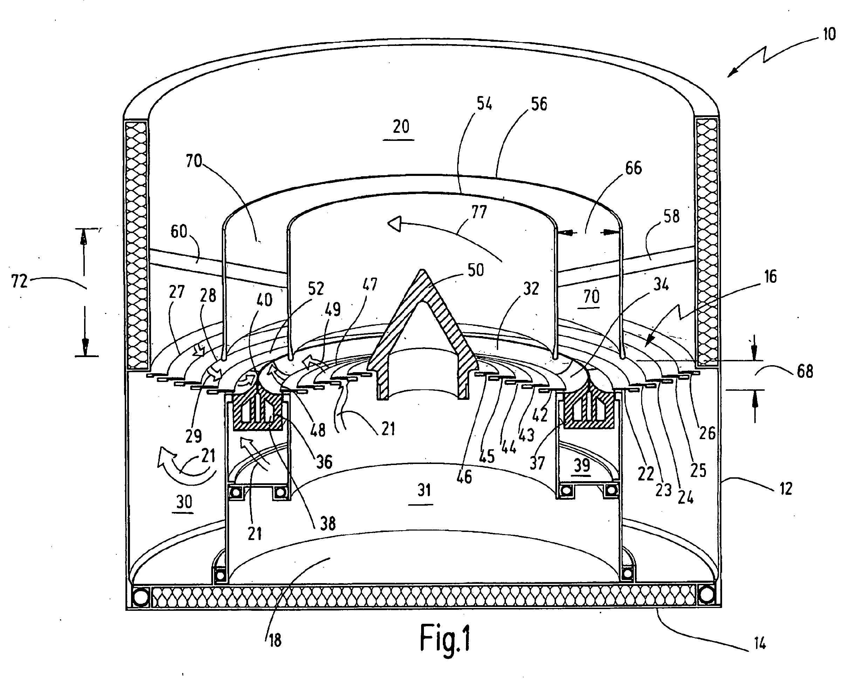

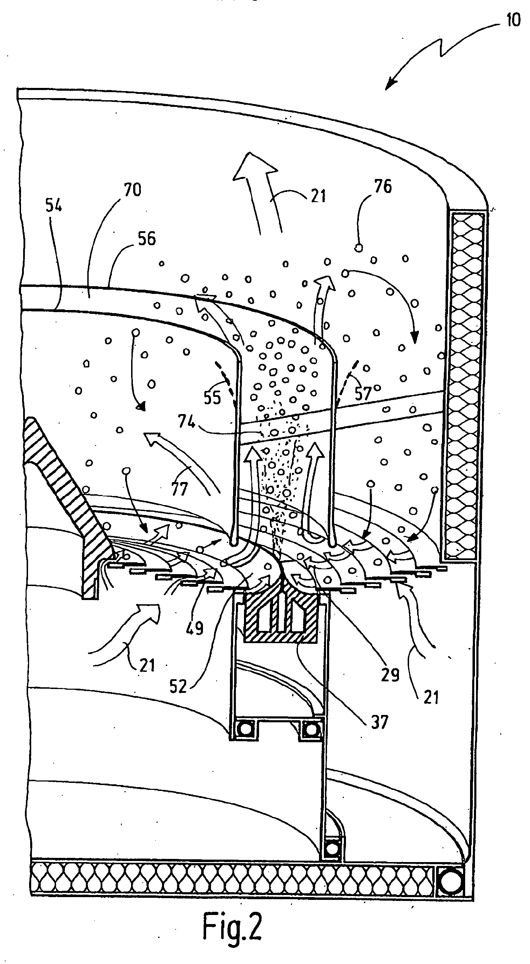

Ein in Fig. 1 und 2 dargestelltes erstes Ausführungsbeispiel einer erfindungsgemäßen Vorrichtung ist in seiner Gesamtheit mit der Bezugsziffer 10 bezeichnet.

Die Vorrichtung 10 weist ein Gehäuse 12 in Form eines stehenden Hohlzylinders auf, dessen unteres Ende 14 geschlossen ist. Im Inneren der Vorrichtung 10 ist ein Boden 16 angeordnet, unter dem ein so genanntes Windhaus 18 vorhanden ist. Über dem Boden 16 erstreckt sich eine Prozesskammer 20.

Der Boden 16 weist einen ersten, radial äußeren Satz an ebenen, sich einander teilweise überlappenden und übereinander gelegten Ringblechen 22 bis 26 auf. Dabei stellt das Ringblech 22 das radial innerste Ringblech dar, auf das das nächst größere Ringblech 23 aufgelegt ist, und zwar derart, dass das Ringblech 23, radial nach innen gesehen, das Ringblech 22 etwas überlappt. Entsprechend ist das auch bei den nach und nach aufgelegten Ringblechen 24, 25 und 26 der Fall.

Dadurch sind zwischen den Ringblechen Ringspalte ausgebildet, wobei in Fig. 1 auf der linken Seite beispielhaft der Ringspalt 27 zwischen dem äußersten Ringblech 26 und dem darunter liegenden Ringblech 25 bzw. der Ringspalt 28 zwischen dem Ringblech 24 und dem darunter liegenden Ringblech 23 bezeichnet ist. Wird durch das Windhaus 18, wie das durch einen Pfeil dargestellt ist, in die entsprechende Kammer 30 an der Unterseite des ersten Satzes von Ringblechen 22 bis 26 Prozessluft 21 herangeführt, so entsteht eine etwa horizontale, radial von außen nach innen gerichtete erste Strömung 29.

Das innerste Ringblech 22 liegt auf einem Ringelement 32 auf, das am oberen Ende die Form eines Pagodendaches 34 aufweist.

In dem Ringelement 32 sind diametral gegenüberliegend zwei Ringspaltdüsen 36 und 37 integriert, die sich jeweils über einen gewissen Umfangsbereich des Ringelementes 32 erstrecken. Es ist prinzipiell auch möglich, bei kleinen Anlagen hier punktuell nach oben sprühende Düsen einzusetzen oder bei extrem großen Anlagen mehrere Ringspaltdüsen oder auch sogar um 360° umlaufende Ringspaltdüsen einzusetzen. Jede der Ringspaltdüsen 36 und 37 weist entsprechende Zuführungen 38 für die von den Ringspaltdüsen zu versprühenden Medien auf. Diese Medien sind meist Sprühluft und eine Sprühflüssigkeit.

Die Zuführung 38 steht daher mit einer vertikal nach oben gerichteten Mündung 40 in Verbindung, aus der diese Medien ausgesprüht werden können. Die Mündungsöffnungen bestehen in Form von vertikal nach oben gerichteten Ringspälten. Dabei ist es bekannt geworden, beispielsweise mittig die Sprühflüssigkeit auszutreiben, die beidseits aus Sprühluftspälten zu einem feinen Sprühnebel versprüht wird.

Der Boden 16 weist ferner einen zweiten Satz an Ringblechen 42 bis 46 auf. Dabei liegt das Ringblech 42 als radial äußerstes Ringblech vis-à-vis zum Ringblech 22 auf dem Pagodendach 34 des Ringelementes 42 an. Auf dem Ringblech 42 liegt dann ein dieses teilweise überlappendes größeres Ringblech 43. Diese Serie ist bis zu dem am höchsten liegenden Ringblech 46 vorgesehen. Mittig im durchmessergeringsten Ringblech 46 steckt ein Kegel 50.

Wie zuvor beschrieben, sind zwischen den Ringblechen 42 bis 46 entsprechende Ringspalte ausgebildet, wobei hier beispielsweise der Ringspalt 47 zwischen den Ringblechen 44 und 43 angedeutet ist, sowie ein Ringspalt 48 zwischen dem Ringblech 42 und der ansteigenden Pagodenfläche des Pagodendaches 34. Wird somit aus einer weiteren Kammer 31 des Windhauses 18 Prozessluft an die Unterseite des zweiten Satzes an Ringblechen 42 bis 46 herangeführt, entsteht eine etwa horizontale, radial von innen nach außen gerichtete zweite Strömung 49.

Zwischen den Ringblechen 22 bis 26 und 42 bis 46 sind Luftleitelemente angeordnet, beispielsweise entsprechend gekrümmte Abstandshalter der Ringbleche untereinander, die der durch die Ringbleche hindurchtretenden Prozessluft 21 außerdem noch eine umfänglich gerichtete Komponente auferlegen. Diese Komponente ist hier entgegen dem Uhrzeigersinn gerichtet.

Aus Fig. 1 ist ersichtlich, dass auch im Bereich des Ringelements 32 eine Kammer 39 vorhanden ist, in die Prozessluft 21 eingeführt werden kann, so dass, wie zuvor erwähnt, zwischen den beidseits an dem Pagodendach 34 anliegenden Ringblechen 42 ein Ringspalt 48 entsteht.

Die nähere konstruktive Ausgestaltung dieser Bauelemente ist beispielsweise in der eingangs erwähnten WO 02/100527 A1 beschrieben.

Aus den Strömungspfeilen von Fig. 1 ist zu entnehmen, dass die beiden entgegengesetzten Strömungen 29 und 49 im Bereich des Ringelementes 32 aufeinandertreffen und vertikal nach oben abgelenkt werden. Dadurch entsteht die so genannte vertikale Aufbruchzone 52. Das Pagodendach 34 fördert eine Umlenkung der horizontalen Bewegungsanteile der beiden oppositären Strömungen 29 und 49 vertikal nach oben. Im Bereich der Aufbruchzone 52 steht eine erste hochstehende zylindrische Wand 54, die als ein Rohrabschnitt 62 ausgebildet ist. Aus der Schnittdarstellung von Fig. 1 ist zu ersehen, dass sich die innere Wand 54 etwa vom Bereich des Ringbleches 42 erhebt. Das untere Ende der Wand 54 steht dabei in einem Abstand 68 über dem Ringblech 42. Dabei steht es auch im Abstand über dem höchsten äußeren Ringblech 26.

Ferner ist noch eine weitere radial weiter außen liegende Wand 56 angeordnet, die auch als ein Rohrabschnitt 64 ausgebildet ist. Die Wand 56 verläuft koaxial zur ersten Wand 54 und somit auch koaxial zur Mittellängsachse der Vorrichtung 10, die sich von der Spitze des Kegels 50 erhebt. Auch hier steht das untere Ende der radial äußeren Wand 56 in einem Abstand 68 über dem Ringblech 42 und auch dem höchsten äußersten Ringblech 26.

Somit wird im Bereich der Aufbruchzone 52 ein Ringraum 70 durch die beiden konzentrischen Wände 54 und 56 umgrenzt, wobei dieser Ringraum 70 sowohl unten als auch oben offen ist. Die Höhe 72 der beiden Wände 54 und 56 ist gleich.

Die Wände 54 und 56 sind über radiale Streben 58 bzw. 60 mit dem Gehäuse 12 verbunden.

Die beiden Wände 54 und 56 werden dadurch in einem radialen Abstand 66 untereinander gehalten. Die Bemaßung ist so gewählt, dass der Querschnitt des Ringraumes 70 etwa 30 % der gesamten freien Fläche des Bodens 16 belegt. Der Höhenabstand zwischen dem unteren Ende der Wände 54 und 56 und dem tiefsten Punkt des Bodens 16 beträgt etwa die Hälfte des radialen Abstandes 66 der Wände 54 und 56 untereinander.

Die Arbeitsweise der Vorrichtung 10 und die Vorteile der zusätzlichen Wände 54 und 56 sollen anhand von Fig. 1 und insbesondere im Zusammenhang mit Fig. 2 beschrieben werden. Die Vorrichtung 10 dient zum Coaten von Tabletten mit einer Überzugsschicht.

Dazu wird das Coatingmedium in einem Lösungsmittel aufgelöst, den Ringspaltdüsen 36 und 37 zugeführt und über deren vertikal sprühende Mündungen 40 vertikal nach oben versprüht. Dadurch entsteht, wie das in Fig. 2 angedeutet ist, ein vertikal nach oben gerichteter Sprühstrahl 74 aus feinsten Tröpfchen des versprühten Behandlungsmediums. Wie zuvor beschrieben, wird Prozessluft 21 über das Windhaus 18 der Unterseite des Bodens 16 zugeführt. Durch die entsprechende Aufteilung in Kammern 30, 31 und die zuvor beschriebene Ausrichtung der beiden Sätze an Ringblechen 22 bis 26 bzw. 42 bis 46 werden zwei entgegengesetzt aufeinander zu gerichtete Strömungen 29 und 49 erzielt, nämlich die radial von außen nach innen strömende erste Strömung 29 sowie die innere, radial von innen nach außen gerichtete zweite Strömung 49. Diese treffen im Bereich des Ringelementes 32 aufeinander und werden vertikal nach oben abgelenkt.

Dabei können die Prozessluftmengen zwischen dem unteren Ende der beiden Wände 54 und 56 und dem Boden 16 in den Ringraum 70 eintreten.

Die Geschwindigkeit und die Menge der zugeführten Prozessluft 21 werden nun so eingestellt, dass der überwiegende Anteil, beispielsweise 80 %, der durch den Boden 16 hindurchgeführten Prozessluftmenge 21 in den Ringraum 70 eintritt. Dadurch erfahren die Gutteilchen 76 eine erhebliche Beschleunigung in vertikaler Richtung.

Ist die freie Querschnittsfläche des Bodens 16 im radial äußeren Abschnitt, also über dem ersten Satz an Ringblechen 22-26, gleich groß wie die freie Querschnittsfläche über dem zweiten Satz an inneren Ringblechen 42-46, kann der Höhenabstand 68 der Unterkante der Wände 54, 56 zum Boden 16 gleich sein.

Sind diese Querschnittsflächen unterschiedlich, kann der Höhenabstand in ein entsprechendes Verhältnis gebracht werden. Beträgt die Querschnittsfläche des äußeren Abschnittes 60 % der gesamten Bodenfläche, wird der Höhenabstand von äußerer Wand 56 zum Höhenabstand der inneren Wand 54 in ein Verhältnis von 60:40 gebracht.

In der Prozesskammer 20 befindet sich auch das zu behandelnde Gut in Form von einzelnen Gutteilchen 76, hier zu coatende Tabletten. Dieses Gut 76 liegt zunächst auf dem Boden 16 auf.

Wird nun die Prozessluft 21 hindurchgeführt, werden die Gutteilchen 76, je nachdem, in welchem Bereich des Bodens 16 diese liegen, radial nach innen bzw. radial nach außen in Richtung Aufbruchzone 52 bewegt. Dann werden die Gutteilchen 76 in den Ringraum 70 zwischen den Wänden 54 und 56 von unten eingebracht und vertikal nach oben bewegt. Dabei werden die Gutteilchen 76 stark beschleunigt.

Im Bereich des Ringraumes 70 werden die Gutteilchen 76 mit dem fein versprühten Behandlungsmedium 74 beaufschlagt, wobei dies aufgrund der seitlichen Begrenzung der Aufbruchzone 52 durch die hochstehenden Wände 54 und 56 sehr gleichmäßig erfolgt.

Die Höhe 72 der Wände 54 und 56 im Zusammenhang mit den Prozessluftführungsparametern ist so gewählt, dass alles Behandlungsmedium 74 spätestens im oberen Endbereich der Wände 54 und 56 auf die Gutteilchen 76 aufgesprüht ist.

Die Gutteilchen 76 bewegen sich im Ringraum 70 aber auch längs einer umfänglichen Komponente, wie dies in Fig. 2 durch den Pfeil 77 dargestellt ist. Das heißt, in dem Ringraum 70 bewegen sich die Gutteilchen 76 zusätzlich mit einer umfänglich schraubenlinienförmig nach oben gewundenen Bewegungskomponente.

Nach Verlassen des oberen Endes des Ringraumes 70 strömt die Prozessluft 21 vertikal nach oben in der Prozesskammer 20 in Richtung eines Auslasses.

Aufgrund der Schwerkraft und der Bewegungsmomente, die den Gutteilchen 76 zuvor auferlegt worden sind, bewegt sich ein Teil der Gutteilchen 76 radial nach außen und fällt gegebenenfalls unter Ablenkung durch die Innenwand des Gehäuses 12 nach unten Richtung Boden 16. Dort werden sie anschließend von dem Luftkissen aus eintretender Prozessluft 21 über dem Boden 16 abgebremst und aufgefangen, so dass keine Gefahr der Beschädigung entsteht. Dann werden die Gutteilchen 76 wieder radial nach innen bewegt.

Entsprechend bewegt sich ein anderer Teil der Gutteilchen 76 radial nach innen. Die Gutteilchen 76 fallen dann aufgrund der Schwerkraft ab und werden durch den Kegel 50 nach unten und radial innen abgelenkt. Auch hier werden die herabfallenden Gutteilchen 76 durch das Luftkissen über den Ringblechen 42 bis 46 abgebremst und wieder radial nach außen in Richtung Aufbruchzone 52 bewegt. Diese Bewegungen der Gutteilchen 76 können dadurch gefördert werden, dass die innere Wand 54 am oberen Ende 55 nach innen und die äußere Wand 56 am oberen Ende 57 nach außen gebogen sind.

Wie erwähnt, ist der Höhenabstand des unteren Endes der Wände 54 und 56 so gewählt, dass bis zu 80 % der Luftmengen in den Ringraum 70 eintreten können und zur Bewegung und Beschleunigung der Gutteilchen 76 herangezogen werden können.

Die definierten Verhältnisse im Bereich des Ringraumes 70 erlauben es, in kurzer Zeit eine große Menge an Behandlungsmedium 74 sehr gleichmäßig verteilt auf die vertikal nach oben bewegten und beschleunigten Gutteilchen 76 aufzuerlegen.

Nach Verlassen des Ringraumes 70 steht ein ausreichender Raum in der Prozesskammer 20 zur Verfügung, in dem sich die Gutteilchen 76 zunächst überwiegend voneinander weg bewegen, so dass alsbald der Trocknungsprozess einsetzen kann und die Gefahr der Ausbildung von Agglomeraten weitgehend ausgeschlossen ist.

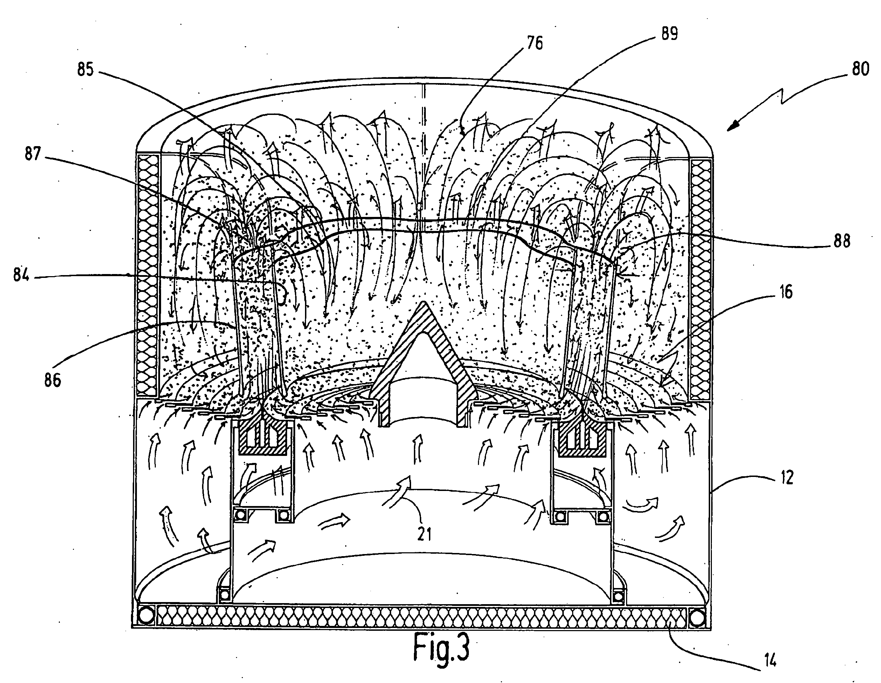

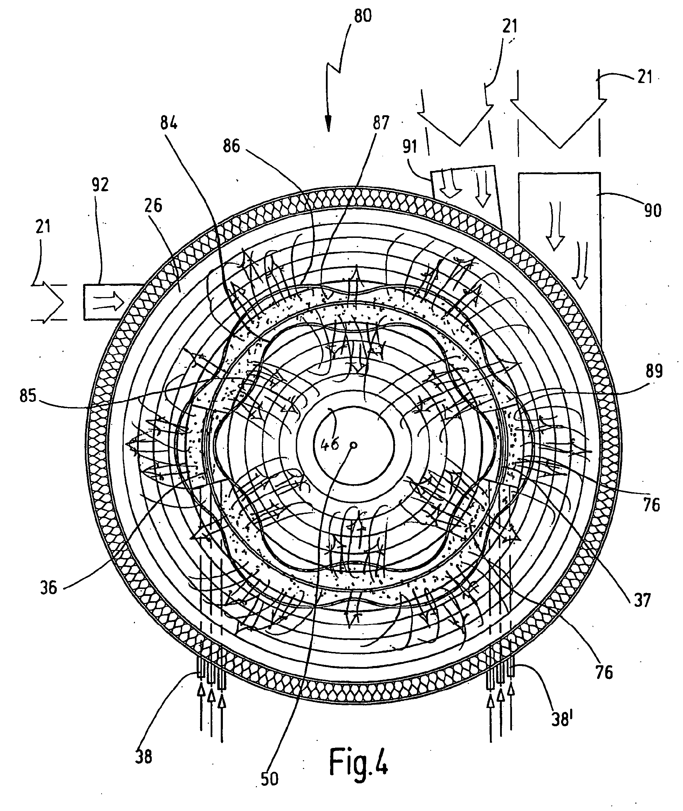

Ein in den Fig. 3 und 4 dargestelltes zweites Ausführungsbeispiel einer erfindungsgemäßen Vorrichtung ist in seiner Gesamtheit mit der Bezugsziffer 80 bezeichnet.

Diese Vorrichtung 80 ist konstruktiv in vielen Teilen gleich ausgebildet wie das in Fig. 1 und 2 dargestellte Ausführungsbeispiel, so dass diesbezüglich dieselben Bezugsziffern für identische Bauteile verwendet werden.

Es soll auch das zweite Ausführungsbeispiel im Wesentlichen anhand der Unterschiede zu dem ersten Ausführungsbeispiel beschrieben werden.

Der Unterschied besteht in der Ausgestaltung der Wände. Die innere Wand 84 ist an ihrem unteren Ende im Bereich des Bodens 16 zylindrisch ausgebildet und geht an ihrem oberen Ende nach und nach in eine Kontur einer umfänglichen Wellenlinie 85 über, wie dies insbesondere aus Fig. 4 ersichtlich ist.

Auch die äußere Wand 86 ist an ihrem unteren Ende zylindrisch ausgebildet und geht, über ihre Höhe gesehen, nach und nach in eine umfängliche Wellenlinie 87 über.

Insbesondere aus der Schnittdarstellung von Fig. 4 ist ersichtlich, dass, wenn in der Wand 84 ein Wellental vorhanden ist, ihr ein entsprechendes Wellental der Wand 86 gegenübersteht. Dasselbe gilt auch für die Wellenberge.

Insbesondere aus der Schnittdarstellung von Fig. 3 ist ersichtlich, dass beide Wände 84 und 86 etwas nach außen geneigt sind, untereinander aber parallel verlaufen.

Der radiale Abstand 88 der Wände 84 und 86 untereinander ist geringer als der zuvor erwähnte Abstand 66.

Dadurch belegt der entsprechend wellig ausgebildete Ringraum 89 im vorliegenden Fall nur 20 % der freien Querschnittsfläche des Bodens 16.

Insbesondere aus der Schnittdarstellung von Fig. 4 ist zu erkennen, dass durch die Wellenform in dem Ringraum 89 noch zusätzlich nach innen und außen gerichtete Bewegungen der Gutteilchen 76 stattfinden. Hier kann von einem Kreuz-Mischungs-Effekt gesprochen werden, der zu einer weiteren Verbesserung des Behandlungsergebnisses weiter beiträgt. Die Ausprägung und die Anzahl der Wellen kann variiert werden und kann auch mehr mäandermäßig als so sanft gewellt sein. Besonders sanfte Wellenlinien wird man bei Gutteilchen 76 einsetzen, die leicht zu Ausbrüchen neigen. Bei kleineren Gutteilchen, die eher unempfindlich sind, kann hier ein stärkerer Kreuz-Mischungs-Effekt bewirkt werden, ohne dass die Gefahr von Ausbrüchen besteht.

Aus der Schnittdarstellung von Fig. 4, beispielsweise auf der rechten Seite, ist zu erkennen, dass den in diesem Bereich über der Ringspaltdüse 37 angeordneten Gutteilchen 76 zusätzlich zu der aufsteigenden und umfänglichen Bewegungskomponente noch eine Komponente in radialer Richtung, hier radial nach außen, auferlegt wird, die sich im nächsten Wellenabschnitt umkehrt. Dadurch entsteht der Kreuz-Mischungs-Effekt.

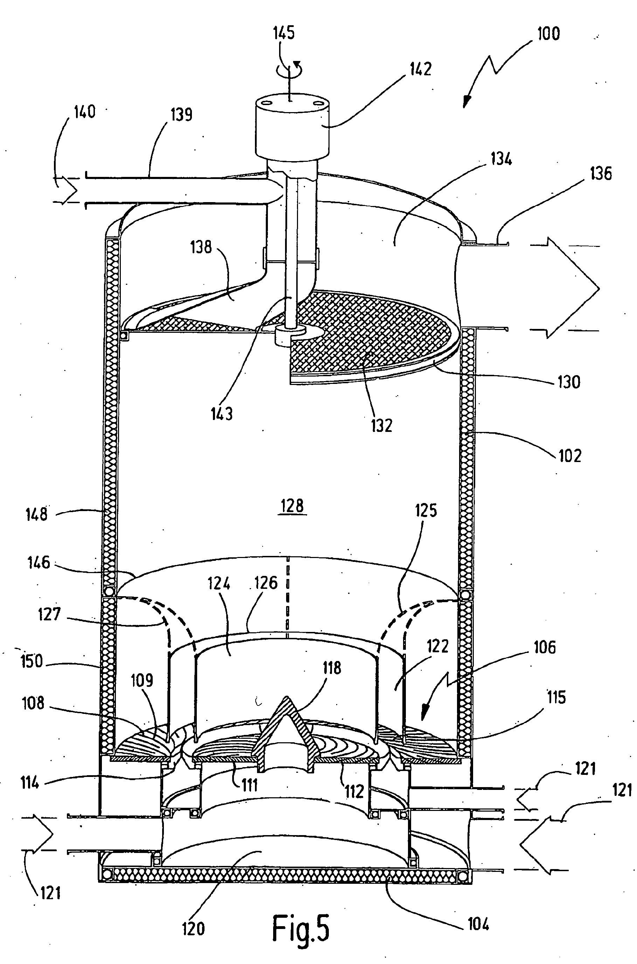

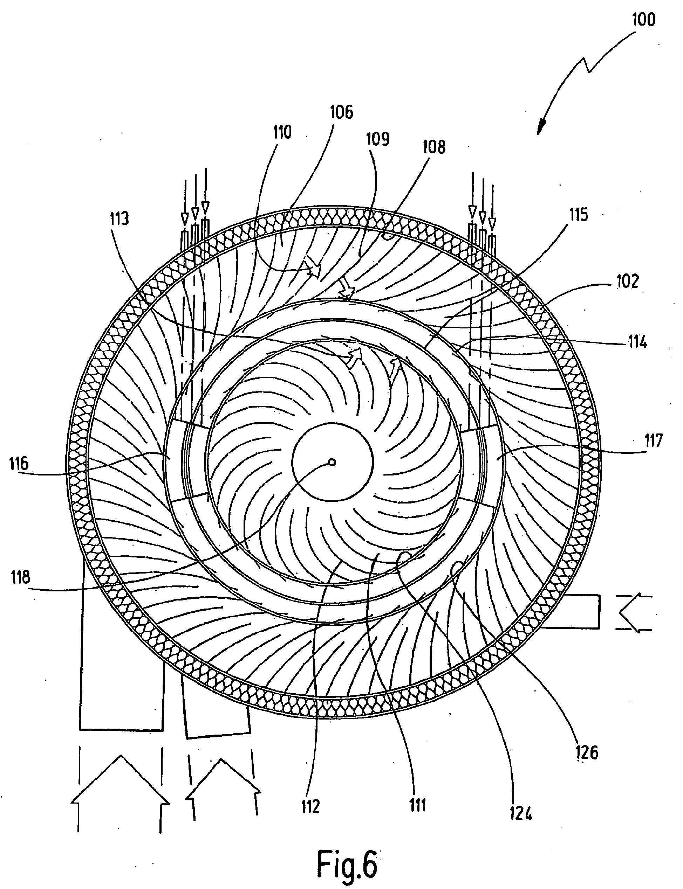

In den Fig. 5 und 6 ist ein drittes Ausführungsbeispiel einer erfindungsgemäßen Vorrichtung in der Gesamtheit mit der Bezugsziffer 100 bezeichnet.

Auch die Vorrichtung 100 weist ein Gehäuse 102 in Form eines stehenden Hohlzylinders auf. Das untere Ende 104 ist geschlossen und beherbergt ein Windhaus 120, in dem verschiedene Einlässe für Prozessluft 121 vorgesehen sind. Der obere Abschluss des Windhauses 120 wird durch einen Boden 106 gebildet.

Der Boden 106 weist eine erste äußere Ringplatte 108 auf, in der durch ein Laserabtragverfahren mehrere Schlitze 109 ausgespart sind. Aus der Schnittdarstellung ist zu erkennen, dass die Schlitze 109 geneigt verlaufen, aus der Draufsicht von Fig. 6 ist zu sehen, dass die Schlitze 109 tangential an die ringförmige Aufbruchzone 115 herangeführt werden. Dadurch entsteht eine erste, radial von außen nach innen gerichtete Strömung 110.

Der Boden 106 weist ferner eine zweite innere Ringplatte 111 auf, in der entsprechende Schlitze 112 ausgelasert sind.

Dadurch wird eine zweite Strömung 113 geschaffen, die radial von innen nach außen gerichtet ist, wie das insbesondere aus Fig. 6 ersichtlich ist.

Mittig befindet sich zwischen den Ringplatten 108 und 111 ein Ringkörper 114, der wiederum die Aufbruchzone 115 bestimmt. In dem Ringkörper 114 sind wieder entsprechende Schlitzdüsen 116 und 117 angeordnet. In der Mitte steht wieder ein Kegel 118.

Die nähere Ausgestaltung des Bodens 106 sowie die Art und Weise der exakten Luftführung ist weiter in der eingangs erwähnten DE 10 2009 051 584 A1 beschrieben, auf die hier diesbezüglich Bezug genommen wird.

Im Bereich der Aufbruchzone 115 steht, wie zuvor beschrieben, eine innere Wand 124, die als ein Rohrabschnitt ausgebildet ist.

Diese ist von einer äußeren, hohlzylindrischen Wand 126 umgeben, die ebenfalls als Rohrabschnitt ausgebildet ist.

Die beiden zum Kegel 118 konzentrischen Rohrabschnitte sind über Streben 125 und 127 mit dem Gehäuse 102 verbunden, die die Wände 124, 126, wie zuvor beschrieben, mit einem gewissen Höhenabstand über dem Boden 106 halten.

Prinzipiell herrschen im Betrieb über dem Boden gleiche Strömungsverhältnisse wie zuvor beschrieben. Dies gilt auch für die Ringkammer 122 zwischen den Wänden 124 und 126.

In Fig. 5 ist noch dargestellt, dass am oberen Ende der Prozesskammer 128 eine Deckplatte 130 angeordnet ist, die als Filter 132 ausgebildet ist.

Bei besonders feinstäubigen Gutteilchen kann nicht ausgeschlossen werden, dass durch die nach oben in der Prozesskammer 128 strömende Prozessluft 121 Teilchen mitgerissen werden. Diese werden durch den Filter 132 ausgefiltert, so dass nur noch ausgefilterte Prozessluft über einen Auslass 136 aus einer Sammelkammer 134 abströmen kann. Über dem Filter 132 ist ein um eine Welle 143 umlaufender Abblasschuh 138 angeordnet, der mit Abblasluft 140 versorgt wird. Dieser umlaufende Abblasschuh 138 bläst mit Hilfe der Abblasluft 140 periodisch vom Filter 132 zurückgehaltene Gutteilchen ab, so dass diese wieder nach unten in die Prozesskammer 128 fallen und am Behandlungsvorgang teilnehmen können. Ein Motor 142 dreht den Abblasschuh 138 um die Mittellängsachse der Vorrichtung 100.

Die Höhe der Wände 124 und 126 kann bis zur Verankerung der Streben 125 und 126 reichen. Das Gehäuse 102 ist dort über eine umlaufende aufblähbare Ringdichtung 146 aus einem oberen zylindrischen Abschnitt 148 und dem sogenannten Produktbehälter 150 zusammengesetzt. In anderen Worten, die Wände, auch die Wände der voranbeschriebenen Ausführungsbeispiele, können bis zur Oberkante des Produktbehälters 150 reichen.

## Patentansprüche

1. Vorrichtung zum Behandeln von partikelförmigem Gut (76), mit einer Prozesskammer (20, 128) zum Aufnehmen und Behandeln des Gutes (76), mit einem Boden (16, 106) mit zahlreichen Durchtrittsöffnungen, durch die Prozessluft (21, 121) in die Prozesskammer (20, 128) einführbar ist, wobei die Durchtrittsöffnungen derart ausgebildet sind, dass zwei radial entgegengesetzt ausgerichtete Strömungen (29, 49; 110, 113)) entstehen, die längs einer kreisförmigen Aufbruchzone (52, 115) aufeinandertreffen und nach oben abgelenkt werden, wobei in der Aufbruchzone (52, 115) dem Gut (76) ein Behandlungsmedium (74) auferlegbar ist, **dadurch gekennzeichnet, dass** die Aufbruchzone (52, 115) sowohl radial innen als auch radial außen von einer umfänglichen, hochstehenden Wand (54, 56; 84, 86; 124, 126) umgrenzt ist, die jeweils im Abstand über dem Boden (16, 106) stehen.

2. Vorrichtung nach Anspruch 1, **dadurch gekennzeichnet, dass** die beiden Wände (54, 56; 84, 86; 124, 126) durch koaxial ineinander gesetzte Rohrabschnitte gebildet sind.

3. Vorrichtung nach Anspruch 1 oder 2, **dadurch gekennzeichnet, dass** die beiden Wände (84, 86) in einem unteren Abschnitt zylindrisch ausgebildet sind und in einem oberen Abschnitt radial geneigt und, umfänglich gesehen, entlang von Wellenlinien (85, 87) verlaufen.

4. Vorrichtung nach einem der Ansprüche 1 bis 3, **dadurch gekennzeichnet, dass** der radiale Abstand (66) der Wände (54, 56; 84, 86; 124, 126) untereinander derart ausgebildet ist, dass diese eine Querschnittsfläche umgrenzen, die 10 % bis 40 % der freien Querschnittsfläche des Bodens (16, 106) beträgt.

5. Vorrichtung nach Anspruch 4, **dadurch gekennzeichnet, dass** die Querschnittsfläche 15 % bis 35 % des freien Querschnitts des Bodens (16, 106) beträgt.

6. Vorrichtung nach Anspruch 4 oder 5, **dadurch gekennzeichnet, dass** die Querschnittsfläche 20 % bis 30 % der freien Querschnittsfläche des Bodens (16, 106) beträgt.

7. Vorrichtung nach einem der Ansprüche 1 bis 6, **dadurch gekennzeichnet, dass** der Höhenabstand (68) des jeweils unteren Endes der Wände (54, 56; 84, 86; 124, 126) zum Boden (16, 106) derart ausgebildet ist, dass ein überwiegender Anteil der in der Aufbruchzone (52, 115) nach oben umgelenkten Prozessluftmengen in einen Ringraum (70, 89) zwischen den beiden Wänden (54, 56; 84, 86; 124, 126) einströmbar ist, wobei der Höhenabstand (68) 30 % bis 70 % des radialen Abstandes (66) der beiden Wände (54, 56; 84, 86; 124, 126) untereinander beträgt.

8. Vorrichtung nach Anspruch 7, **dadurch gekennzeichnet, dass** der Höhenabstand (68) 40 % bis 60 % des radialen Abstandes (66) der beiden Wände (54, 56; 84, 86; 124, 126) beträgt.

9. Vorrichtung nach Anspruch 7 oder 8, **dadurch gekennzeichnet, dass** der Höhenabstand (68) 50 % des radialen Abstandes (66) der beiden Wände (54, 56; 84, 86; 124, 126) beträgt.

10. Vorrichtung nach einem der Ansprüche 7 bis 9, **dadurch gekennzeichnet, dass** das Verhältnis zwischen dem Höhenabstand (68) der inneren Wand (54, 84, 124) und dem Höhenabstand (68) der äußeren Wand (56, 86, 126) gleich dem Verhältnis des bezüglich der Aufbruchzone (52, 115) innen liegenden freien Querschnitt des Bodens (16, 106) zum bezüglich der Aufbruchzone (52, 115) außen liegenden freien Querschnitt des Bodens (16, 106) ist.

11. Vorrichtung nach einem der Ansprüche 1 bis 10, **dadurch gekennzeichnet, dass** die radial innere Wand (54) am oberen Ende nach innen gebogen (55) und die radial äußere Wand (56) nach außen (57) gebogen verläuft.

## Claims

1. Device for treating particulate material (76), having a process chamber (20, 128) for receiving and treating the material (76), having a bottom (16, 106) with numerous through openings through which the process air (21, 121) can be introduced into the process chamber (20, 128), wherein the through openings are designed such that there result two flows (29, 49; 110, 113) of radially opposite orientation, which meet along a circular break-up zone (52, 115) and are deflected upwards, wherein in the break-up zone (52, 115) a treatment medium (74) can be imposed on the material (76), **characterized in that** the break-up zone (52, 115) is bounded both radially inwards and radially outwards by a tall circumferential wall (54, 56; 84, 86; 124, 126), which stand above the bottom (16, 106) in each case with a separation.

2. Device according to Claim 1, **characterized in that** the two walls (54, 56; 84, 86; 124, 126) are formed by pipe sections placed coaxially one inside the other.

3. Device according to Claim 1 or 2, **characterized in that** the two walls (84, 86) are cylindrical in a lower section and inclined radially in an upper section and, as seen circumferentially, run along wave lines (85, 87).

4. Device according to one of Claims 1 to 3, **characterized in that** the radial separation (66) between the walls (54, 56; 84, 86; 124, 126) is designed such that these bound a cross section area which constitutes 10% to 40% of the free cross section area of the bottom (16, 106).

5. Device according to Claim 4, **characterized in that** the cross section area constitutes 15% to 35% of the free cross section area of the bottom (16, 106).

6. Device according to Claim 4 or 5, **characterized in that** the cross section area constitutes 20% to 30% of the free cross section area of the bottom (16, 106).

7. Device according to one of Claims 1 to 6, **characterized in that** the height separation (68) between the respective lower end of the walls (54, 56; 84, 86; 124, 126) and the bottom (16, 106) is designed such that a predominant fraction of the process air quantities deflected upwards in the break-up zone (52, 115) can be made to flow into an annular space (70, 89) between the two walls (54, 56; 84, 86; 124, 126), wherein the height separation (68) constitutes 30% to 70% of the radial separation (66) between the two walls (54, 56; 84, 86; 124, 126).

8. Device according to Claim 7, **characterized in that** the height separation (68) constitutes 40% to 60% of the radial separation (66) between the two walls (54, 56; 84, 86; 124, 126).

9. Device according to Claim 7 or 8, **characterized in that** the height separation (68) constitutes 50% of the radial separation (66) between the two walls (54, 56; 84, 86; 124, 126).

10. Device according to one of Claims 7 to 9, **characterized in that** the ratio between the height separation (68) of the inner wall (54, 84, 124) and the height separation (68) of the outer wall (56, 86, 126) is equal to the ratio of the free cross section of the bottom (16, 106) inward of the break-up zone (52, 115) to the free cross section of the bottom (16, 106) outward of the break-up zone (52, 115).

11. Device according to one of Claims 1 to 10, **characterized in that** the radially inner wall (54) at the upper end runs curved inwards (55) and the radially outer wall (56) runs curved outwards (57).

## Revendications

1. Dispositif de traitement d'une matière particulaire (76), comportant une chambre de processus (20, 128) destinée à recevoir et traiter la matière (76), un fond (16, 106) pourvu de nombreuses ouvertures de passage à travers lesquelles l'air de processus (21, 121) peut être introduit dans la chambre de processus (20, 128), les ouvertures de passage étant conçues de façon que deux courants (29, 49 ; 110, 113) orientés en sens opposés radialement soient formés, qui se rencontrent le long d'une zone de fracture circulaire (52, 115) et sont déviés vers le haut, la matière (76) pouvant être soumise à un milieu de traitement (74) dans la zone de fracture (52, 115), **caractérisé en ce que** la zone de fracture (52, 115) est délimitée aussi bien radialement intérieurement que radialement extérieurement par une paroi verticale circonférentielle (54, 56 ; 84, 86 ; 124, 126) qui s'élève chaque fois à une certaine distance au-dessus du fond (16, 106).

2. Dispositif selon la revendication 1, **caractérisé en ce que** les deux parois (54, 56 ; 84, 86 ; 124, 126) sont formées par des parties de tube emboîtées coaxialement.

3. Dispositif selon l'une des revendications 1 ou 2, **caractérisé en ce que** les deux parois (84, 86) sont cylindriques dans une partie inférieure et inclinées radialement dans une partie supérieure et s'étendent, vu circonférentiellement, le long de lignes ondulées (85, 87).

4. Dispositif selon l'une des revendications 1 à 3, **caractérisé en ce que** la distance radiale (66) des parois (54, 56 ; 84, 86 ; 124, 126) entre elles est conçue de façon que celles-ci délimitent une surface de section transversale qui représente 10 % à 40 % de la surface de section transversale libre du fond (16, 106).

5. Dispositif selon la revendication 4, **caractérisé en ce que** la surface de section transversale représente 15 % à 35 % de la section transversale libre du fond (16, 106).

6. Dispositif selon l'une des revendications 4 ou 5, **caractérisé en ce que** la surface de section transversale représente 20 % à 30 % de la surface de section transversale libre du fond (16, 106).

7. Dispositif selon l'une des revendications 1 à 6, **caractérisé en ce que** la distance verticale (68) entre l'extrémité inférieure respective des parois (54, 56 ; 84, 86 ; 124, 126) et le fond (16, 106) est conçue de façon qu'une part prépondérante des quantités d'air de processus déviées vers le haut dans la zone de fracture (52, 115) puisse entrer dans un espace annulaire (70, 89) entre les deux parois (54, 56 ; 84, 86 ; 124, 126), la distance verticale (68) représentant 30 % à 70 % de la distance radiale (66) entre les deux parois (54, 56 ; 84, 86 ; 124, 126).

8. Dispositif selon la revendication 7, **caractérisé en ce que** la distance verticale (68) représente 40 % à 60 % de la distance radiale (66) entre les deux parois (54, 56 ; 84, 86 ; 124, 126).

9. Dispositif selon l'une des revendications 7 ou 8, **caractérisé en ce que** la distance verticale (68) représente 50 % de la distance radiale (66) entre les deux parois (54, 56 ; 84, 86 ; 124, 126).

10. Dispositif selon l'une des revendications 7 à 9, **caractérisé en ce que** le rapport entre la distance verticale (68) de la paroi intérieure (54, 84, 124) et la distance verticale (68) de la paroi extérieure (56, 86, 126) est égal au rapport entre la section transversale libre intérieure du fond (16, 106) par rapport à la zone de fracture (52, 115) et la section transversale libre extérieure du fond (16, 106) par rapport à la zone de fracture (52, 115).

11. Dispositif selon l'une des revendications 1 à 10, **caractérisé en ce que** la paroi radialement intérieure (54) est courbée vers l'intérieur (55) à l'extrémité supérieure et la paroi radialement extérieure (56) courbée vers l'extérieur (57).
